# EUROPEAN PATENT APPLICATION

(11) **EP 2 168 723 A1**
(43) Date of publication of application: **31.03.2010**
(21) Application number: 09398007.6
(22) Date of filing: 25.09.2009
(51) Int. Cl.: B24C 1/04, G06T 7/00

(54) **Hard plate cutting machine using an abrasive water jet**

(30) Priority: 25.09.2008 PT 10418908
(71) Applicant: CEI-Companhia de Equipamentos Industriais, Lda., 3700-018 S. Joao da Madeira (PT)
(72) Inventor: Antunes da Silva, Agostinho Manuel, 3700-018 S. João da Madeira (PT)
(74) Representative: Costa Franca, Vitor Hugo

(57) **Abstract**

Hard plate cutting machine using an abrasive water jet with a base member (1), a grid (2), a beam (4) along which runs the mobile carriage (5) with a cutting head (6), with a digital video camera (8)that is mounted upon a vertical independent support (7), which captures an image of the plate to be cut and edits it eliminating distortions using the image of a matrix plate and digitalises the outline, defects, seams and shades of the plate to be processed. The automatic control of the cutting head is programmed using optimisation by a computer working with the digitalised data regarding the plate and the geometry of the parts to be cut. The machine also has the use of a second cutting head.

## Description

This invention concerning a cutting machine for hard plate in stone, ceramic, glass or metal, using an abrasive water jet.

In technical terms, hard plate cutting machines using water jets with abrasives and a cutting head using an automatically controlled water jet are already known. These machines normally have a base member which contains a water tank upon the upper part of which is a grid where the plate to be cut is placed. The cutting head is mounted upon a mobile carriage on a beam which, in turn, slides along two of the opposite sides of the base of the machine. In some cases these machines also allow for movement of the water jet head in a direction perpendicular to the plate.

Control of the movement of the water jet head is programmed using the geometry of different pieces to be cut taking into account: the geometry, normally irregular, of the outline of the plate; any defects that may exist on the plate and an estimated optimisation of the positioning of the pieces. All this preparation is performed manually beforehand resulting in basic data being introduced into the controller which allows for the cutting procedure to begin.

The inconveniences of using a manual method for the optimisation of the positioning of the pieces to be cut are essentially related to the necessary time taken for their positioning, which increases when the geometry of the pieces to be cut is very varied and, subsequently, the possible combinations of the positioning of the different pieces.

Another of the problems with this type of machine is its productivity. The productivity of these machines is associated with the time it takes for a cutting head to cut through the thickness of the plate.

This invention intends to solve the inconveniences caused by the manual method in optimising the positioning of the pieces with the use of a digitalisation process of the outline and defects of the plate and an optimisation by a computer working with the data relating to the plate and geometry of the pieces to be cut.

Digitalisation of the outline and defects of the plate is carried out by editing the images obtained by one or more digital video cameras. The image obtained is edited, using the process described below, so that any distortions are corrected. From this image, and taking into account the contrast between the plate and its seat, the outline is digitalised using a set of coordinate points with a certain distance between them. Should the contrast not be sufficient, the photograph is stored and the subsequent optimisation of the pieces is carried out through the overlapping of the geometry of the pieces onto the photograph. Any defects, should they be of sufficient contrast, are digitalised in the same way into geometrical figures limited by an outline identified by a set of coordinate points. After creation of this defect outline, the operator may scale this same defect, classifying it within a pre-established scale.

Should the contrast not be sufficient for automatically detecting a defect, the latter may be identified and digitalised point by point onto the photograph reproduced on the screen by using the cursor. The shades and seams may also be characterised on the photograph reproduced on the screen through the method described above.

An improvement in the productivity of the machines is obtained by the use of another cutting head.

The invention is described with the help of two figures together which, in a non-limitative way, represent:

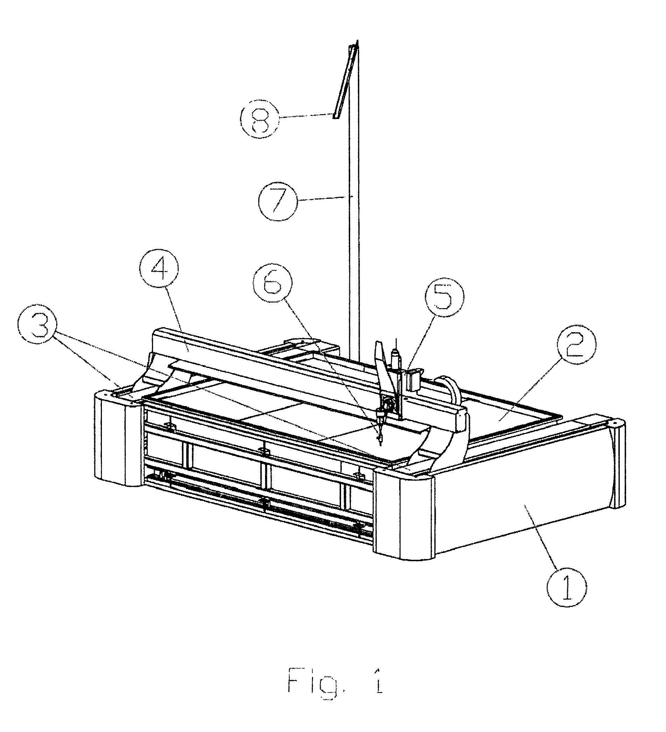

- **Figure 1** - Perspective, in schematic form, of the plate cutting machine of the invention;

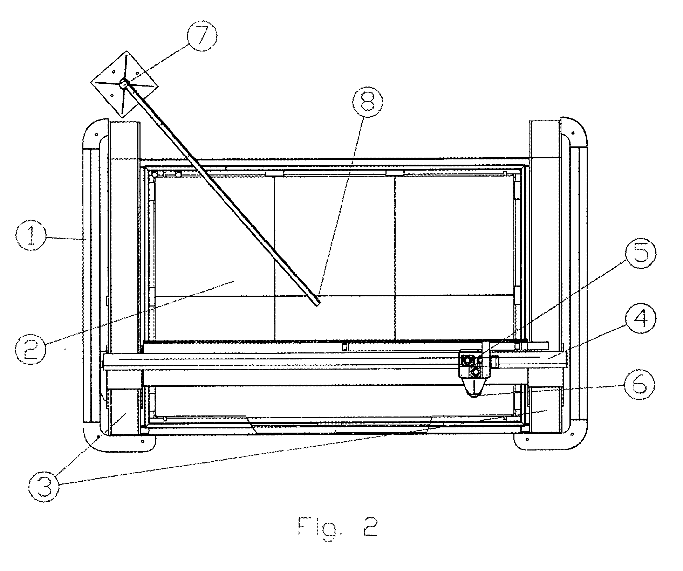

- **Figure 2** - Plan, in schematic form, of the plate cutting machine of the invention, and

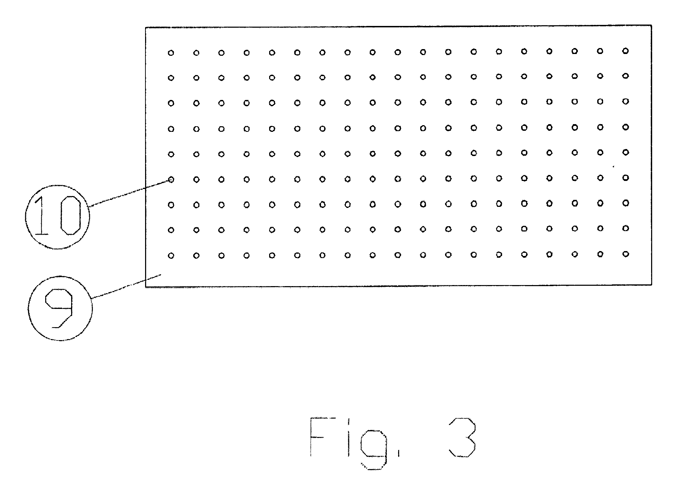

- **Figure 3** - Schematic drawing of the plate matrix.

The machine comprises a base member (1), which contains the water tank and upon which rests the removable grid (2). The plate to be cut is placed on this grid. Along the two opposite sides (3) of the base runs the beam (4). A mobile carriage is mounted upon this, (5) which moves laterally along it and contains the water jet cutting head (6). Suspended at a determined height from the grid, on an independent vertical support, (7) there is a digital video camera connected to a computer, which is not shown on the figure.

From the digital video camera, (8) an image of the plate is obtained and this is stored on the computer.

The image obtained usually has distortions caused by chromatic aberrations. The degree of distortion depends on the quality of the lens and the focal distance used. The aberrations also cause diversions which manifest themselves as coloured coronas on the edges of the images. The software used allows for the dysfunctions mentioned above to be corrected as follows:
- Before the "reading" of the plates, so as to calibrate the focal distance and illumination of the camera, a plate matrix (9) is placed upon the grid (2). This plate matrix has known geometry and comprises perforations or points (10) of a different colour, of the same diameter, lined up and separated one from the other at the same distance;
- A photograph is taken of this plate matrix covering the work area which is edited by software comparing the image with the known geometry and a calibration matrix of the errors mentioned above is constructed.

The geometry of the outline of the image of the plate to be processed, obtained by digitalisation, is corrected in accordance with the correlation between the image of the plate matrix and the known geometry of this plate matrix. At each point on the surface of the plan of the grid, the correction is the difference between the coordinates of this point, in the image of the plate matrix, and the known coordinates of the geometry of the plate matrix. The correction to be applied to any point of the image of the outline of the plate to be processed with the same coordinates at any point of the image of the plate matrix is the value of the calibration matrix at this point.

Therefore, the digitalisation of the outline of the plate to be processed is obtained. Any defects on the plate with sufficient contrast are digitalised by means of a similar process. Any defects that do not have sufficient contrast to be detected automatically are digitalised using the image of the plate to be processed on the computer screen with the help of the cursor and of software for the technique. The operator may also classify the defects in accordance with a pre-established scale.

The seams may also be digitalised from the image of the plate to be processed on the computer screen using the process described above. It is also possible to introduce data regarding the shades and texture of the plate.

Once the characteristics of the plate have been digitalised, we may proceed with the optimisation of the layout of the pieces to be cut using suitable known software.

This invention intends to improve the productivity of the machine foreseeing the possibility of installing two cutting carriages at the same point or installing two cutting heads on the same carriage. When using the machine for cutting pieces that are the same, placed alongside each other, it is possible to use two carriages, each one with a cutting head, which, using the same instructions with references to transacted origins, carry out the cutting of two alike pieces at the same time. Should it be intended to increase the cutting speed, it is possible to use two cutting heads on the same carriage so that the work performed by the first is completed by the second.

## Claims

1. - Machine for cutting hard plate, of stone, ceramic, glass or metal using an abrasive jet comprising a base member (1) which contains a water tank, a grid (2) where the plate to be processed is placed, a beam (4), which moves along opposite sides (3) of the tank, a carriage (5) which moves along the beam and a water jet cutting head, with the possibility of vertical movement, (6) located on the carriage. The movements of the carriage beam and the cutting head are numerically controlled by interpolated axes **characterised by** there being suspended at a determined height from the grid (2) on an independent vertical support (7), a digital video camera (8) connected to a computer, which captures an image of the plate to be processed, **by** identifying the lines that define the outline of the plate or the outlines of the areas of defect on the plate through the contrast between, respectively, the plate and the tank or between areas with defect and the rest of the plate **and by** the distortions of the image of the outline being corrected by a calibration matrix obtained by comparison between a plate matrix and its image.

2. - Machine in accordance with claim 1, **characterised by** the part of the outline of the plate or of the outlines of the defects not identified by the contrast and the identification of the seams being digitalised point by point onto the photograph reproduced on the screen of the computer with the use of the cursor.

3. - Machine in accordance with the previous claims, **characterised by** the types of defects and the shades of the plate being classified in accordance with pre-established scales and by this information being associated with the digital files formed in accordance with the previous claims.

4. - Machine in accordance with the previous claims, **characterised by,** with the digitalised elements of the plate to be processed and with the geometry of the pieces to be cut, optimising the layout of pieces on the plate and generating control orders for the machine.

5. - Machine in accordance with claims 1 to 4, **characterised by** there being a second independent carriage on the beam (4) carrying a second cutting head.

6. - Machine in accordance with claims 1 to 4, **characterised by** there being a second water jet cutting head on the same carriage.
